# FASCICULE DE BREVET EUROPEEN

(11) **EP 4 219 231 B1**
(45) Date de publication et mention de la délivrance du brevet: **27.08.2025**
(21) Numéro de dépôt: 23154021.2
(22) Date de dépôt: 30.01.2023
(51) Int. Cl.: B60N 2/809, B60N 2/28

(54) **ELÉMENT DE SUPPORT DE SIÈGE COMPRENANT UN ÉLÉMENT D'APPUI RÉGLABLE**
SITZTRÄGERELEMENT MIT VERSTELLBAREM ABSTÜTZELEMENT
SEAT SUPPORT ELEMENT WITH ADJUSTABLE SUPPORT ELEMENT

(30) Priorité: 31.01.2022 FR 2200847
(43) Date de publication de la demande: 02.08.2023
(73) Titulaire: Faurecia Sièges d'Automobile, 92000 Nanterre (FR)
(72) Inventeur: HAMMADI, Semir, 91160 SAULX-LES-CHARTREUX (FR); PIEDERRIERE, Jean-Yves, 91670 ANGERVILLE (FR); CHOUAH, Ahmed, 91150 ETAMPES (FR)
(74) Mandataire: Novagraaf Group

(56) Documents cités:
- EP-A2- 0 326 265
- WO-A1-2006/029659
- FR-A3- 3 028 465

## Description

La présente invention concerne un élément de support de siège, du type comprenant un corps définissant une surface externe et un élément d'appui monté de façon réglable selon une direction de réglage sur le corps par l'intermédiaire d'un dispositif de réglage, le dispositif de réglage comprenant un élément de guidage s'étendant sur la surface externe du corps.

Le document WO 2006/029659 décrit un élément de support de siège selon le préambule de la revendication 1.

L'invention s'applique par exemple à un dossier de siège de véhicule, l'élément d'appui formant un appui-tête réglable en hauteur.

De façon connue, l'appui-tête d'un siège de véhicule est généralement monté sur le dossier par l'intermédiaire de tiges solidaires de l'appui-tête et reçues dans des fourreaux s'étendant dans le corps du dossier. Le réglage en hauteur de la position de l'appui-tête se fait en faisant coulisser les tiges dans les fourreaux et en bloquant celles-ci lorsque la position souhaitée est atteinte.

Un tel réglage en hauteur nécessite un agencement complexe entre les tiges et les fourreaux pour permettre le verrouillage et le déverrouillage de la position de l'appui-tête, ces opérations nécessitant en outre une action particulière de la part de l'utilisateur en plus du déplacement de l'appui-tête dans le cas d'un fonctionnement manuel du réglage en hauteur. En outre, le montage et le démontage de l'appui-tête, par exemple pour nettoyer celui-ci, sont complexes et l'absence d'appui-tête rend l'aspect du dossier non satisfaisant car les ouvertures d'introduction des tiges dans les fourreaux restent visibles.

L'un des buts de l'invention est de pallier ces inconvénients en proposant un élément de support de siège comprenant un élément d'appui réglable en position dont la modification de position est effectuée de façon simple et qui puisse être monté et démonté sans difficulté, l'élément de support conservant un aspect satisfaisant lorsque l'élément d'appui est démonté.

A cet effet, l'invention concerne un élément de support selon la revendication 1.

En montant l'élément d'appui sur la surface externe du corps de l'élément de support et en le faisant simplement coulisser sur la bande fixée sur la surface externe pour en modifier la position, il n'est pas nécessaire de prévoir de fourreau ou d'ouverture dans le corps pour la réception de l'élément d'appui. Le changement de position de l'élément d'appui peut être effectué de façon très simple sans nécessiter l'utilisation d'un système de verrouillage. En outre, lorsque l'élément d'appui est retiré, l'élément de support conserve un aspect satisfaisant.

L'élément de support selon l'invention peut en outre comprendre une ou plusieurs des caractéristiques définies dans les revendications 2 à 9.

D'autres aspects et avantages de l'invention apparaîtront à la lecture de la description qui suit, donnée à titre d'exemple et faite en référence aux dessins annexés, dans lesquels :
[Fig 1] - la Fig. 1 est une représentation schématique en perspective d'un élément de support selon l'invention, l'élément d'appui étant dans une première position,
[Fig 2] - la Fig. 2 est une représentation schématique en perspective de l'élément de support de la Fig .1, l'élément d'appui étant dans une deuxième position,
[Fig 3] - la Fig. 3 est une représentation schématique en coupe selon l'axe III-III de la Fig. 1, et
[Fig 4] - la Fig. 4 est une représentation schématique agrandie d'un détail de la Fig. 3.

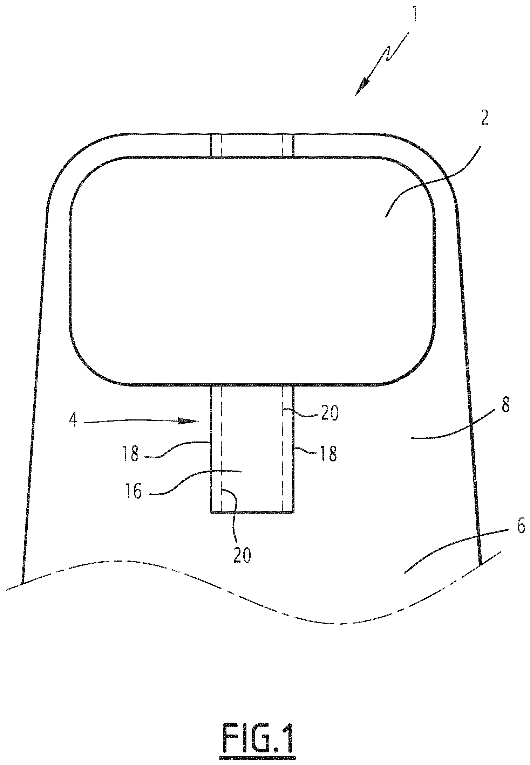

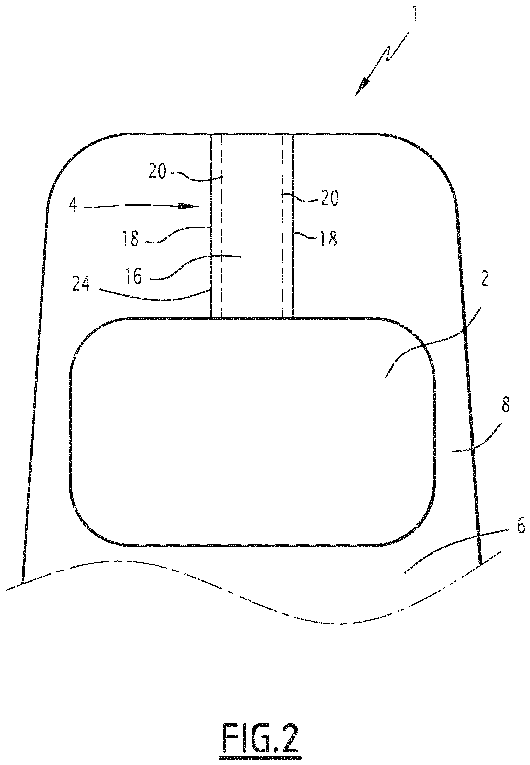

En référence aux Figs 1 et 2, on décrit un élément de support de siège 1 comprenant un élément d'appui 2 monté de façon réglable en position selon une direction de réglage D par l'intermédiaire d'un dispositif de réglage 4. L'élément de support de siège 1 représenté sur les Figs 1 et 2 est un dossier de siège de véhicule et l'élément d'appui 2 est un appui-tête réglable en hauteur, c'est-à-dire que la direction de réglage D correspond à la direction d'élévation du dossier. La suite de la description sera faite en référence à un tel dossier et à un tel appui-tête. Il est cependant entendu que l'invention peut s'appliquer à un autre type d'élément de support de siège 1, tel qu'une assise, l'élément d'appui 2 étant alors par exemple un élément rehausseur, par exemple à destination d'un enfant.

L'élément de support 1 comprend un corps 6 définissant une surface externe 8. Le corps 6 est agencé en termes de forme et de caractéristiques mécaniques pour accueillir un occupant du siège. Ainsi, le corps 6 comprend par exemple de façon connue une matelassure en mousse montée sur une armature métallique, l'occupant du siège prenant appui sur la matelassure lorsqu'il est assis sur le siège. La surface externe 8 forme la partie visible du corps 6 depuis l'extérieur de l'élément de support 1. La surface externe 8 est par exemple formée par au moins un élément de garnissage 10, telle qu'une peau ou une couche de revêtement textile, enrobant la matelassure et l'armature métallique. L'élément de garnissage 10 confère ainsi son aspect à l'élément de support 1. La surface externe 8 comprend plus particulièrement une face d'accueil montrée sur les Figs 1 et 2, et une face de dos, la face d'accueil et la face de dos s'étendant de part et d'autre du corps 6. La face d'accueil est définie comme étant la face de l'élément de support 1 sur laquelle un occupant du siège prend appui lorsqu'il est assis dans le siège.

L'élément d'appui 2 est monté de façon mobile en translation selon la direction de réglage D sur la surface externe 8 du corps 6. Dans le cas d'un appui-tête, l'élément d'appui 2 est plus particulièrement monté sur la face d'accueil de la surface externe 8 de sorte à se trouver en regard de la tête d'un occupant du siège lorsque celui-ci est assis sur le siège. Il est entendu que, dans le cas d'un autre type d'élément d'appui, tel qu'une tablette ou autre, l'élément d'appui peut être monté sur la face de dos de la surface externe 8.

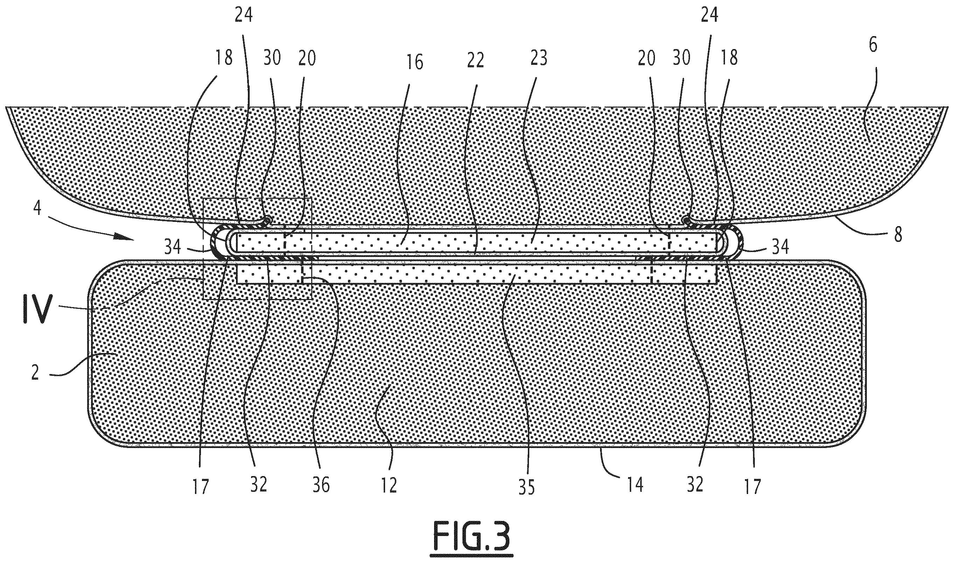

Dans le cas d'un appui-tête ou d'un rehausseur, l'élément d'appui 2 comprend par exemple un corps en mousse 12 revêtu d'au moins un élément de garnissage 14, comme plus particulièrement visible sur la Fig. 3, afin de former un coussin apte à recevoir de façon confortable un occupant du siège.

Le dispositif de réglage 4 permet, comme mentionné précédemment, de déplacer l'élément d'appui 2 sur la surface externe 8 du corps 6 selon la direction de réglage D afin de permettre de le placer dans différentes positions par rapport au corps 6, comme représenté sur les Figs. 1 et 2. Plus particulièrement, dans le cas d'un appui-tête, le dispositif de réglage 4 permet de déplacer l'élément d'appui 2 sur la face d'accueil de la surface externe 8 afin de modifier la hauteur de l'élément d'appui 2 sur le corps 6 de sorte à adapter la position de l'élément d'appui 2 à la taille de l'occupant du siège. L'élément d'appui 2 est ainsi mobile entre une première position (Fig. 1) et une deuxième position (Fig. 2). Comme cela sera décrit plus en détail ultérieurement, le dispositif de réglage 4 permet également de positionner l'élément d'appui 2 dans une pluralité de positions entre ces première et deuxième positions. Selon le mode de réalisation représenté sur les Figs. 1 et 2, l'élément d'appui 2 s'étend au voisinage du bord supérieur du corps 6 dans la première position et est rapproché du centre du corps 6 dans la deuxième position. On notera que, dans toutes les positions de l'élément d'appui 2, celui-ci s'étend toujours en regard de la surface externe 8 du corps 6, et non au-dessus du corps 6, comme cela est le cas pour un appui-tête traditionnel.

Le dispositif de réglage 4 comprend un élément de guidage 16 et au moins un élément coulissant 17 monté de façon coulissante sur l'élément de guidage 16.

L'élément de guidage 16 s'étend sur la surface extérieure 8 du corps 6 principalement selon la direction de réglage D, c'est-à-dire que la plus grande dimension de l'élément de guidage 16 s'étend selon la direction de réglage D. Cette dimension selon la direction de réglage correspond sensiblement à la distance séparant la première position de la deuxième position de sorte que l'élément d'appui 2 s'étend en regard d'une partie de l'élément de guidage 16 dans toutes les positions de l'élément d'appui 2 par rapport au corps 6. L'élément de guidage 16 est par exemple formée par une bande 22 comprenant deux bords latéraux 18 s'étendant selon la direction de réglage D de part et d'autre de la bande (22). L'élément de guidage 16 est fixé sur la surface externe 8 du corps 6 par exemple par couture de la bande 22 sur le corps 6. Plus particulièrement, la bande 22 est fixée au corps 6 par exemple par au moins une couture 20 s'étendant selon la direction de réglage D au voisinage d'un bord latéral 18. Selon le mode de réalisation représenté sur les figures, la bande 22 est fixée sur le corps 2 par deux coutures 20 s'étendant au voisinage des deux bords latéraux 18 de la bande 22. La distance entre une couture 20 et le bord latéral 18 au voisinage de laquelle s'étend cette couture 20 est par exemple comprise entre 8 mm et 10 mm. Les coutures 20 s'étendent sur toute la longueur, ou hauteur, de la bande 22 mesurée selon la direction de réglage D.

La bande 22 est formée par un matériau souple, tel qu'une peau ou une matériau textile. La bande 22 est avantageusement de même nature que l'élément de garnissage 10 du corps 6.

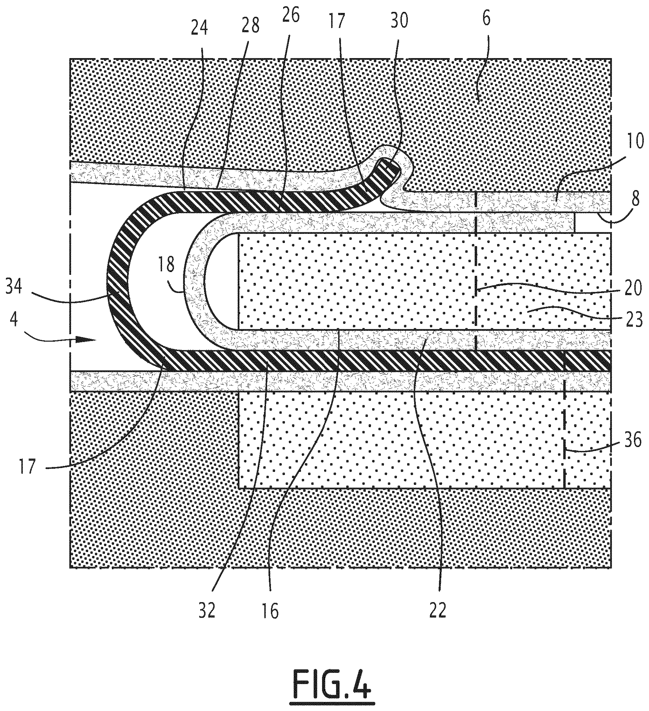

Selon le mode de réalisation représenté sur les Figs. 3 et 4, l'élément de guidage 16 comprend en outre une plaque rigide 23 autour d'au moins une partie de laquelle la bande 22 s'étend. Par plaque rigide, on entend une plaque réalisée en un matériau plus rigide que celui de la bande 22, par exemple du carton ou un matériau plastique. La plaque rigide 23 permet ainsi de rigidifier l'élément de guidage 16 pour que celui-ci puisse supporter l'élément d'appui 2, comme cela sera décrit ultérieurement. La bande 22 s'étend au moins sur la face externe de la plaque rigide 23 et passe autour des bords latéraux de la plaque rigide 23, de sorte que la bande 22 comprend une partie marginale appliquée contre la surface externe 8 du corps 6. En effet, en dehors de la partie de la face externe en regard de laquelle s'étend l'élément d'appui 2, le reste de la face externe est visible depuis l'extérieur de l'élément de support 1, comme représenté sur les Figs. 1 et 2. Ainsi, la présence de la bande 22 de l'élément de guidage 16 sur la surface externe 8 du corps 6 ne dégrade pas l'aspect de l'élément de support 1 et peut même être utilisée pour conférer un aspect particulier distinctif à l'élément de support 1. Les coutures 22 s'étendent par exemple de la face externe de la bande 22, au travers de la plaque rigide 23 et de la partie marginale de la bande 22 appliquée sur la surface externe 8 du corps 6, jusqu'au corps 6. Les coutures 20 traversent par exemple l'élément de garnissage 14 du corps 6 pour s'enfoncer dans la matelassure du corps 6 et ainsi assurer une fixation robuste de l'élément de guidage 16 sur le corps 6.

L'élément de guidage 16 définit au moins une gorge 24 s'étendant selon la direction de réglage D. La gorge 24 est ouverte vers l'extérieur de l'élément de guidage selon une direction sensiblement parallèle à la surface externe 8 du corps 6. La gorge 24 s'étend au moins sur toute la course de l'élément d'appui 2 entre la première position et la deuxième position. La gorge 24 est délimitée par la surface externe 8 du corps 6 d'une part et par la bande 22 d'autre part, c'est-à-dire que la gorge 24 s'étend entre la surface externe 8 du corps 6 et la partie de la bande 22 qui est tournée vers la surface externe 8 du corps 6, par exemple la partie marginale de la bande 22 qui s'étend entre la plaque rigide 23 et la surface externe 8 du corps 6. Plus particulièrement, selon ce mode de réalisation, la bande 22 est fixée sur la surface externe 8 du corps 6 de sorte que les bords latéraux 18 soient espacés de la surface externe 8 du corps 6 afin de laisser un espace au voisinage des bords latéraux 18 entre la bande 22 et la surface externe 8 du corps 6 pour former deux gorges 24 s'étendant de part et d'autre de la bande 22. Le fond de chaque gorge 24 est alors formé par la couture 20 de sorte que chaque gorge 24 comprend une paroi 26 formée par la partie de la bande 22 s'étendant entre un bord latéral 18 et la couture 20 correspondante, une paroi 28 formée par la surface externe 8 du corps 6 s'étendant en regard de cette partie de la plaque et un fond formé par la couture 20. Par conséquent, la profondeur d'une gorge 24 correspond sensiblement à la distance séparant le bord latéral 18 de la couture 20 correspondante. Ainsi, les gorges 24 peuvent être formées de façon particulièrement simple par la fixation de la bande sur la surface externe 8 du corps 6, la bande ne nécessitant pas de présenter une forme particulière pour délimiter la ou les gorges 24. Selon un mode de réalisation, la paroi 26 est appliquée contre la paroi 28 en dehors de la partie de l'élément de guidage 16 recevant l'élément coulissant 17, comme cela sera décrit ultérieurement. En d'autres termes, la gorge 24 peut être fermée en dehors de la zone de la gorge 24 où s'étend l'élément coulissant 17, la gorge 24 s'ouvrant du fait de la déformabilité du corps 6 et/ou de son élément de garnissage 10 dans la zone recevant l'élément coulissant 17.

Chaque gorge 24 peut être ouverte à au moins une de ses extrémités selon la direction de réglage D. Selon un mode de réalisation, la gorge 24 peut être ouverte à ses deux extrémités selon la direction de réglage D de sorte qu'un élément coulissant 17 peut être introduit dans la gorge 24 par l'une de ses extrémités en déplaçant l'élément coulissant 17 selon la direction de réglage D lorsqu'un élément d'appui 2 doit être monté sur le corps 6 de l'élément de support 1, comme cela sera décrit plus en détail ultérieurement.

L'élément coulissant 17 est formé par un profilé, par exemple en matériau plastique, fixé à l'élément d'appui 2 et s'étendant en saillie de la face interne de l'élément d'appui 2, cette face interne étant tournée vers la surface externe 8 du corps 6. Le profilé s'étend selon la direction de réglage D sur la face interne de l'élément d'appui 2 et présente une longueur mesurée selon cette direction légèrement inférieure à celle de l'élément d'appui 2, par exemple au moins la moitié de la hauteur de l'élément d'appui 2 mesurée selon la direction de réglage D. En d'autres termes, l'élément coulissant 17 s'étend une majeure partie de l'élément d'appui 2 selon la direction de réglage D.

L'élément coulissant 17 est monté de façon coulissante sur l'élément de guidage 16 pour permettre le déplacement de l'élément d'appui 2 le long de l'élément de guidage 16 selon la direction de réglage D. A cet effet, l'élément coulissant 17 est monté en contact glissant sur la bande 22. Par contact glissant, on entend que l'élément coulissant 17 peut glisser le long de la bande 22 de façon continue. En d'autres termes, la bande 22 ne comprend pas de crans recevant l'élément coulissant 17 dans différentes positions. L'élément coulissant 17 comprend une extrémité libre 30 montée de façon coulissante dans la gorge 24, comme représenté sur les Figs. 3 et 4. L'extrémité libre 30 est en outre agencée pour maintenir l'élément d'appui 2 dans la position dans laquelle il a été placé lorsqu'aucune contrainte selon la direction de réglage D n'est exercée sur l'élément d'appui 2. En d'autres termes, l'élément coulissant 17 permet de déplacer l'élément d'appui 2 le long de l'élément de guidage 16 lorsqu'un utilisateur exerce une force sur l'élément d'appui 2 selon la direction de réglage D pour en changer la position et l'élément d'appui 2 reste dans la position dans laquelle il a été placé lorsque l'utilisateur cesse d'exercer cette force. Ainsi, le dispositif de réglage selon l'invention ne nécessite pas l'utilisation d'un dispositif de verrouillage ou de crans, comme indiqué précédemment, pour maintenir l'élément d'appui 2 dans une position particulière.

Afin d'assurer le coulissement dans la gorge 24, l'extrémité libre 30 présente la forme d'une branche s'étendant dans la gorge 24, par exemple du bord latéral 18 jusqu'au voisinage du fond formé par la couture 20. L'extrémité libre 30 présente par exemple une longueur, mesurée selon la direction allant du bord latéral 18 jusqu'à la couture 20, inférieure de 1 mm ou 2 mm à la profondeur de la gorge 24. En d'autres termes, l'extrémité libre 30 présente une longueur comprise entre 6 et 9 mm pour une gorge 24 présentant une profondeur comprise entre 8 et 10 mm.

Afin d'assurer le blocage de l'élément d'appui 2 dans la position dans laquelle il a été placé en l'absence de contrainte selon la direction de réglage D, l'extrémité libre 30 présente par exemple une forme incurvée vers la surface externe 8 du corps 6, comme représenté sur la Fig. 4. Une telle forme incurvée permet de contraindre l'extrémité libre 30 contre la surface externe 8 du corps 6 et d'empêcher le déplacement de l'élément d'appui 2 lorsqu'il n'est pas déplacé volontairement par un utilisateur. En effet, la forme incurvée permet à l'extrémité libre 30 de « s'enfoncer » dans le corps 6 et/ou son élément de garnissage 10 du fait de la souplesse de ceux-ci et ainsi d'assurer un blocage de l'élément d'appui 2 sur l'élément de guidage 2. Le blocage peut en outre est renforcé si la gorge 24 est fermée de part et d'autre de l'élément coulissant 17, comme décrit précédemment. Ainsi, la friction entre l'élément coulissant 17, la bande 22 et le corps 6 et son élément de garnissage 10 permet d'assurer le blocage en position de l'élément d'appui 2, cette friction étant en outre agencée pour permettre un déplacement de l'élément d'appui 2 lorsqu'un utilisateur exerce une force selon la direction de réglage D sur l'élément d'appui 2.

Pour assurer la fixation de l'élément coulissant 17 sur l'élément d'appui 2, le profilé comprend par exemple une autre branche 32 cousue à l'élément d'appui 2. La branche 32 est reliée à la branche formant l'extrémité libre 30 par une base 34 s'étendant en regard du bord latéral 18 lorsque l'élément d'appui 2 est monté sur l'élément de guidage 16, comme représenté sur la Fig. 3. Ainsi, l'élément coulissant 17 présente par exemple une section en forme de U, l'une des branches du U 32 s'étendant contre la surface interne de l'élément d'appui 2 et étant cousue à celui-ci, l'autre des branches du U formant l'extrémité libre 30 introduite dans une gorge 24 et la base 34 permettant à l'élément coulissant 17 de s'étendre autour du bord latéral 18 correspondant de la bande 22 de l'élément de guidage 16.

Afin d'assurer une fixation robuste de l'élément coulissant 17 sur l'élément d'appui 2, la branche 32 est par exemple cousue sur une plaque rigide 35 s'étendant dans l'élément d'appui 2 du côté de la surface interne de celui-ci. La plaque rigide 35 s'étend sur l'envers de l'élément de garnissage 14 de l'élément d'appui 2. Une couture 36 fixe la branche 32 à la plaque rigide 35 en traversant l'élément de garnissage 14, comme représenté sur la Fig. 3.

Le dispositif de réglage 4 comprend par exemple deux éléments coulissants 17 tels que décrits ci-dessus, chaque élément coulissant 17 coopérant avec l'une des gorges 24 de l'élément de guidage 16, comme représenté sur la Fig. 3. Dans ce cas, les formes en U des éléments coulissants 17 sont ouvertes l'une vers l'autre. On assure ainsi un montage robuste de l'élément d'appui 2 sur le corps 6 de l'élément de support 1 et on empêche notamment un changement d'orientation de l'élément d'appui 2 par rapport au corps 6.

L'élément d'appui 2 peut être démonté facilement du corps 6. Il suffit pour cela de déplacer l'élément d'appui selon la direction de réglage D jusqu'à faire sortir le ou les éléments coulissants 17 de la ou des gorges 24 par une extrémité de celles-ci. Le montage se fait également facilement en introduisant le ou les éléments coulissants 17 selon la direction de réglage D dans la ou les gorges 24 par une extrémité de celles-ci. Ainsi l'élément d'appui 2 peut être retiré de l'élément de support 2, par exemple pour le nettoyer, et remis sur celui-ci sans nécessiter l'utilisation d'un outil particulier. En outre, l'absence d'élément d'appui 2 ne dégrade pas l'aspect de l'élément de support 1.

Les gorges 24 ont été décrites comme s'étendant de part et d'autre de la bande 22 formant l'élément de guidage 16. Il est cependant entendu que la gorge pourrait être pratiquée dans l'élément de guidage, par exemple sensiblement au centre de celui-ci et coopérer avec un élément coulissant unique introduit dans la gorge 24. A cet effet, l'élément coulissant pourrait présentant une section en forme de T et coopérer avec une gorge de forme complémentaire.

## Revendications

1. Elément de support (1) de siège comprenant un corps (6) définissant une surface externe (8) et un élément d'appui (2) monté de façon réglable selon une direction de réglage (D) sur le corps (6) par l'intermédiaire d'un dispositif de réglage (4), le dispositif de réglage (4) comprenant un élément de guidage (16) s'étendant sur la surface externe (8) du corps (6), ledit élément de guidage (16) comprenant une bande (22) fixée sur la surface externe (8) du corps (6) et s'étendant selon la direction de réglage (D), le dispositif de réglage (4) comprenant en outre au moins un élément coulissant (17) solidaire de l'élément d'appui (2), ledit élément coulissant (17) étant monté en contact glissant sur la bande (22) et comprenant une extrémité libre (30) s'étendant entre ladite bande (22) et la surface externe (8) du corps (6) de sorte à permettre le réglage de la position de l'élément d'appui (2) par rapport au corps (6) par coulissement de l'élément coulissant (17) sur l'élément de guidage (16) selon la direction de réglage (D), **caractérisé en ce que** la bande (22) est cousue sur la surface externe (8) du corps (2) par au moins une couture (20), l'élément de guidage (16) définissant une gorge (24) entre la bande (22) et la surface externe (8) du corps (6), ladite gorge (24) s'étendant d'un bord latéral (18) de la bande (22) à la couture (20), ladite couture (20) formant le fond de ladite gorge (24), l'extrémité libre (30) de l'élément coulissant (17) étant montée de façon coulissante dans ladite gorge..

2. Elément de support selon la revendication 1, dans lequel la bande (22) est fixée sur la surface externe (8) du corps (2) par deux coutures (20) s'étendant chacune au voisinage d'un bord latéral (18) de la bande (22) de sorte à définir avec ladite surface externe (8) deux gorges (24) s'étendant selon la direction de guidage (D) de part et d'autre de la bande (22).

3. Elément de support selon la revendication 1 ou 2, dans lequel la bande (22) est réalisée en un matériau souple, l'élément de guidage comprenant en outre une plaque rigide, la bande (22) s'étendant autour d'au moins une partie de ladite plaque rigide.

4. Elément de support selon l'une quelconque des revendications 1 à 3, dans lequel le dispositif de réglage comprend deux éléments coulissants (17) solidaires de l'élément d'appui (2), chaque élément coulissant (17) comprenant une extrémité libre (30) s'étendant entre ladite bande (22) et la surface externe (8) du corps (6).

5. Elément de support selon l'une quelconque des revendications 1 à 4, dans lequel l'élément coulissant (17) est formé par un profilé en matériau plastique présentant, de préférence, une section en forme de U, l'une des branches (32) du U s'étendant contre une surface interne de l'élément d'appui (2) et l'autre branche du U formant l'extrémité libre (30) de l'élément coulissant (17), l'élément coulissant (17) s'étendant autour d'un bord latéral (18) de la bande (22).

6. Elément de support selon l'une quelconque des revendications 1 à 5, dans lequel l'extrémité libre (30) de l'élément coulissant (17) présente une forme incurvée vers la surface externe (8) du corps (6) de sorte à être contrainte contre ladite surface externe (8) pour assurer un blocage en position de l'élément d'appui (2) sur le corps (6) lorsqu'aucune contrainte selon la direction de réglage (D) n'est exercée sur l'élément d'appui (2).

7. Elément de support selon l'une quelconque des revendications 1 à 6, dans lequel l'élément coulissant (17) est cousu sur une plaque rigide (35) s'étendant dans l'élément d'appui (2).

8. Elément de support selon l'une quelconque des revendications 1 à 7, dans lequel le corps (6) forme un dossier de siège et l'élément d'appui (2) forme un appui-tête.

9. Elément de support selon la revendication 8, dans lequel la direction de réglage (D) correspond à la direction d'élévation du corps (6), la position de l'élément d'appui (2) étant réglable en hauteur par rapport au corps (6).

## Patentansprüche

1. Sitzstützelement (1), umfassend einen Körper (6), der eine äußere Oberfläche (8) definiert, und ein Auflageelement (2), das so angebracht ist, dass es mittels einer Einstellvorrichtung (4) in einer Einstellrichtung (D) am Körper (6) verstellbar ist, wobei die Einstellvorrichtung (4) ein Führungselement (16) umfasst, das sich auf der äußeren Oberfläche (8) des Körpers (6) erstreckt, wobei das Führungselement (16) ein Band (22) umfasst, das an der äußeren Oberfläche (8) des Körpers (6) befestigt ist und sich entlang der Einstellrichtung (D) erstreckt, wobei die Einstellvorrichtung (4) ferner mindestens ein Gleitelement (17) umfasst, das einstückig mit dem Auflageelement (2) ist, wobei das Gleitelement (17) in Gleitkontakt auf dem Band (22) angebracht ist und ein freies Ende (30) umfasst, das sich zwischen dem Band (22) und der äußeren Oberfläche (8) des Körpers (6) erstreckt, um eine Einstellung der Position des Auflageelements (2) bezogen auf den Körper (6) zu ermöglichen, indem das Gleitelement (17) auf dem Führungselement (16) in der Einstellrichtung (D) verschoben wird, **dadurch gekennzeichnet, dass** das Band (22) mit mindestens einer Naht (20) an die äußere Oberfläche (8) des Körpers (2) genäht ist, wobei das Führungselement (16) zwischen dem Band (22) und der äußeren Oberfläche (8) des Körpers (6) eine Fuge (24) definiert, wobei die Fuge (24) sich von einer Seitenkante (18) des Bandes (22) bis zur Naht (20) erstreckt, wobei die Naht (20) den Boden der Fuge (24) bildet und wobei das freie Ende (30) des Gleitelements (17) so angebracht ist, dass es in der Fuge gleiten kann.

2. Stützelement nach Anspruch 1, wobei das Band (22) an der äußeren Oberfläche (8) des Körpers (2) durch zwei Nähte (20) befestigt ist, die jeweils in der Nähe einer Seitenkante (18) des Bandes (22) verlaufen, um mit der äußeren Oberfläche (8) zwei Fugen (24) zu definieren, die sich entlang der Führungsrichtung (D) auf beiden Seiten des Bandes (22) erstrecken.

3. Stützelement nach Anspruch 1 oder 2, wobei das Band (22) aus einem flexiblen Material besteht und das Führungselement ferner eine starre Platte umfasst, wobei sich das Band (22) um mindestens einen Teil der starren Platte herum erstreckt.

4. Stützelement nach einem der Ansprüche 1 bis 3, wobei die Einstellvorrichtung zwei Gleitelemente (17) umfasst, die mit dem Auflageelement (2) einstückig sind, wobei jedes Gleitelement (17) ein freies Ende (30) umfasst, das sich zwischen dem Band (22) und der äußeren Oberfläche (8) des Körpers (6) erstreckt.

5. Stützelement nach einem der Ansprüche 1 bis 4, wobei das Gleitelement (17) durch ein Profil aus Kunststoff gebildet ist, das vorzugsweise einen U-förmigen Querschnitt aufweist, wobei einer der U-Schenkel (32) sich an einer inneren Fläche des Auflageelements (2) erstreckt und der andere U-Schenkel das freie Ende (30) des Gleitelements (17) bildet, wobei sich das Gleitelement (17) um eine Seitenkante (18) des Bandes (22) herum erstreckt.

6. Stützelement nach einem der Ansprüche 1 bis 5, wobei das freie Ende (30) des Gleitelements (17) eine in Richtung der äußeren Oberfläche (8) des Körpers (6) gekrümmte Form aufweist, um gegen die äußere Oberfläche (8) eingeschränkt zu werden, um sicherzustellen, dass das Auflageelement (2) in seiner Position am Körper (6) verriegelt ist, wenn auf das Auflageelement (2) keine Kraft in der Einstellrichtung (D) ausgeübt wird.

7. Stützelement nach einem der Ansprüche 1 bis 6, wobei das Gleitelement (17) mit einer sich in das Auflageelement (2) erstreckenden starren Platte (35) vernäht ist.

8. Stützelement nach einem der Ansprüche 1 bis 7, wobei der Körper (6) eine Sitzlehne und das Auflageelement (2) eine Kopfstütze bildet.

9. Stützelement nach Anspruch 8, wobei die Einstellrichtung (D) der Höhenrichtung des Körpers (6) entspricht, wobei die Position des Auflageelements (2) bezogen auf den Körper (6) höhenverstellbar ist.

## Claims

1. Seat support element (1) comprising a body (6) defining an outer surface (8) and a rest element (2) mounted so as to be adjustable in an adjustment direction (D) on the body (6) by means of an adjustment device (4), the adjustment device (4) comprising a guide element (16) extending on the outer surface (8) of the body (6), the guide element (16) comprising a band (22) fastened to the outer surface (8) of the body (6) and extending along the adjustment direction (D), the adjustment device (4) further comprising at least one sliding element (17) integral with the rest element (2), the sliding element (17) being mounted in sliding contact on the band (22) and comprising a free end (30) extending between the band (22) and the outer surface (8) of the body (6) so as to allow adjustment of the position of the rest element (2) relative to the body (6) by sliding the sliding element (17) on the guide element (16) in the adjustment direction (D), **characterized in that** the band (22) is sewn to the outer surface (8) of the body (2) by at least one seam (20), the guiding element (16) defining a groove (24) between the band (22) and the outer surface (8) of the body (6), the groove (24) extending from a side edge (18) of the band (22) to the seam (20), the seam (20) forming the bottom of the groove (24), the free end (30) of the sliding element (17) being mounted so as to slide in the groove.

2. Support element according to claim 1, wherein the band (22) is fastened to the outer surface (8) of the body (2) by two seams (20) each extending in the vicinity of a side edge (18) of the band (22) so as to define with the outer surface (8) two grooves (24) extending along the guide direction (D) on either side of the band (22).

3. Support element according to either claim 1 or claim 2, wherein the band (22) is made of a flexible material, the guide element further comprising a rigid plate, the band (22) extending around at least one part of the rigid plate.

4. Support element according to any of claims 1 to 3, wherein the adjustment device comprises two sliding elements (17) integral with the rest element (2), each sliding element (17) comprising a free end (30) extending between the band (22) and the outer surface (8) of the body (6).

5. Support element according to any of claims 1 to 4, wherein the sliding element (17) is formed by a profile made of plastics material, preferably having a U-shaped cross-section, one of the branches (32) of the U extending against an inner surface of the rest element (2) and the other branch of the U forming the free end (30) of the sliding element (17), the sliding element (17) extending about a side edge (18) of the band (22).

6. Support element according to any of claims 1 to 5, wherein the free end (30) of the sliding element (17) has a shape curved toward the outer surface (8) of the body (6) so as to be constrained against the outer surface (8) to ensure the rest element (2) is locked in position on the body (6) when no force in the adjustment direction (D) is exerted on the rest element (2).

7. Support element according to any of claims 1 to 6, wherein the sliding element (17) is sewn to a rigid plate (35) extending into the rest element (2).

8. Support element according to any of claims 1 to 7, wherein the body (6) forms a seat back and the rest element (2) forms a headrest.

9. Support element according to claim 8, wherein the adjustment direction (D) corresponds to the direction of elevation of the body (6), the position of the rest element (2) being adjustable in height relative to the body (6).
